# EUROPÄISCHE PATENTSCHRIFT

(11) **EP 2 181 367 B1**
(45) Veröffentlichungstag und Bekanntmachung des Hinweises auf die Patenterteilung: **28.02.2018**
(21) Anmeldenummer: 08787025.9
(22) Anmeldetag: 08.08.2008
(51) Int. Cl.: G05B 19/042, G05B 19/418, G06F 9/455

(54) **VERFAHREN ZUM BEDIENEN EINES FELDGERÄTS DER PROZESSAUTOMATISIERUNGSTECHNIK MIT MINDESTENS ZWEI MESSKANÄLEN UND FELDGERÄT DER PROZESSAUTOMATISIERUNGSTECHNIK MIT MINDESTENS ZWEI MESSKANÄLEN, DAS ZUR DURCHFÜHRUNG DES VERFAHRENS GEEIGNET IST**
METHOD FOR OPERATING A FIELD DEVICE FOR PROCESS AUTOMATION HAVING AT LEAST TWO MEASUREMENT CHANNELS AND FIELD DEVICE FOR PROCESS AUTOMATION HAVING AT LEAST TWO MEASUREMENT CHANNELS AND SUITABLE FOR PERFORMING SAID METHOD
PROCÉDÉ DE COMMANDE D'UN APPAREIL DE TERRAIN DE L'AUTOMATISATION DE PROCESSUS DISPOSANT D'AU MOINS DEUX CANAUX DE MESURE, ET APPAREIL DE TERRAIN DISPOSANT D'AU MOINS DEUX CANAUX DE MESURE ET ADAPTÉ À LA MISE EN OEUVRE DU PROCÉDÉ

(30) Priorität: 21.08.2007 DE 102007039529
(43) Veröffentlichungstag der Anmeldung: 05.05.2010
(73) Patentinhaber: Endress + Hauser Conducta GmbH+Co. KG, 70839 Gerlingen (DE)
(72) Erfinder: BABEL, Wolfgang, 71263 Weil der Stadt (DE); ROBL, Stefan, 70839 Gerlingen (DE); WITTMER, Detlev, 75433 Maulbronn (DE)
(74) Vertreter: Andres, Angelika Maria
(86) Internationale Anmeldenummer: PCT/EP2008/060429
(87) Internationale Veröffentlichungsnummer: WO 2009/024481

(56) Entgegenhaltungen:
- DE-A1- 10 147 706
- DE-A1- 10 245 176
- DE-A1- 10 307 650
- US-A1- 2003 236 937
- US-A1- 2006 206 218
- US-B1- 6 574 515

## Beschreibung

Die Erfindung betrifft ein Verfahren zum Bedienen eines Feldgeräts der Prozessautomatisierungstechnik mit mindestens zwei Messkanälen gemäß dem Oberbegriff des Anspruchs 1 und ein Feldgerät der Prozessautomatisierungstechnik mit mindestens zwei Messkanälen, das zur Durchführung des Verfahrens geeignet ist, gemäß dem Oberbegriff des Anspruchs 6.

In der Prozessautomatisierungstechnik werden vielfach Feldgeräte eingesetzt, die zur Erfassung einer Prozessvariablen dienen.

Beispiele für solche Feldgeräte sind Füllstandsmessgeräte, Durchflussmessgeräte, Druck- oder Temperaturmessgeräte etc. die die entsprechenden Prozessvariablen Füllstand, Durchfluss, Druck- oder Temperatur erfassen.

Eine Vielzahl solcher Feldgeräte wird von der Fa. Endress + Hauser hergestellt und vertrieben.

Feldgeräte bestehen in der Regel aus einem Messumformer und einem Sensor. Der Sensor wandelt im Wesentlichen die Prozessvariable in ein analoges elektrisches Signal um. Im Messumformer wird der eigentliche Messwert erzeugt. Meist findet im Messumformer auch eine Weiterverarbeitung des vom Sensor gelieferten Rohmesswerts statt. So kann im Messumformer z. B. über eine Linearisierungsfunktion das nichtlineare Verhalten des Sensors kompensiert werden.

Über die Messumformer werden die Messwerte in der Regel zu Steuerungen (SPS-Einheiten) weitergeleitet, die einen Prozess steuern oder überwachen.

Die Weiterleitung der Messwerte erfolgt bei modernen Feldgeräten nicht mehr analog über eine 4-20 mA Stromschleife sondern digital über einen Feldbus.

Moderne Feldgeräte weisen deshalb eine Feldbusschnittstelle auf, über die eine bidirektionale digitale Kommunikation über den Feldbus ermöglicht wird.

Diese Feldgeräte sind sehr komplex und müssen bei der Inbetriebnahme und auch während des Betriebs konfiguriert und parametriert werden.

Hierfür sind entsprechende herstellerübergreifende Bedienwerkzeuge bekannt (z.B. FieldCare Fa. Endress+Hauser).

Um den Bedienwerkzeugen die Funktionalität der unterschiedlichen Feldgeräte bekannt zu machen, sind entsprechende standardisierte Gerätebeschreibungen notwendig, die normalerweise vom Feldgerätehersteller zur Verfügung gestellt werden.

Beispiele für solche Gerätebeschreibungen sind HART-, Profibus-, Foundation Fielbus- Gerätebeschreibungen. Weiterhin sind nach dem FDT-Standard DTMs (Device Type Manager) als ausführbare Gerätebeschreibungen bekannt.

Zu jedem Feldgerät muss deshalb eine entsprechende Gerätebeschreibung erstellt werden, bevor es in ein Bedienwerkzeug integriert werden kann.

Schon bei typischen Feldgeräten mit nur einem einzigen Sensor ist die Erstellung der Gerätebeschreibungen aufgrund der Vielzahl von bedienbaren Parametern (teilweise über 500) und deren Abhängigkeiten zwischen den Parametern sehr aufwendig.

Insbesondere in der Analysetechnik werden häufig Feldgeräte eingesetzt, die aus einem Messumformer mit mehreren angeschlossenen Sensoren bestehen. Man spricht bei diesen Feldgeräten auch von mehrkanaligen oder Mehrkanal-Feldgeräten. Jedem Messkanal ist dabei ein bestimmter Sensor zugeordnet.

Ein solches Feldgerät ist aus US 6 574 515 B1 bekannt.

Typische Sensoren, die in der Analysetechnik eingesetzt werden, sind pH-, Leitfähigkeits- bzw. Sauerstoffsensoren.

Bei einem Feldgerät mit vier Messkanälen ergeben sich insgesamt 20 verschiedene mögliche Sensorkombinationen. Jede Sensorkombination wird als individuelles Feldgerät angesehen, für das deshalb eine eigene Gerätebeschreibung erstellt werden muss.

In der Regel werden die Gerätebeschreibungen vom Gerätehersteller zur Verfügung gestellt und müssen von diesem entsprechend nachgepflegt werden. Je mehr Gerätebeschreibungen ein Gerätehersteller anbietet, desto umfangreicher ist der Entwicklungs- und Pflegeaufwand.

Für den Anwender ist die Bedienung eines solchen Mehrkanal-Feldgeräts, d. h. eines Feldgerätes mit mindestens zwei Messkanälen aufwendig, da er für die jeweilige Sensorkombination die passende Gerätebeschreibung benötigt.

Insgesamt ist das Bedienen von Feldgeräten der Prozessautomatisierungstechnik mit mindestens zwei Messkanälen sehr aufwendig.

Aufgabe der Erfindung ist es deshalb, ein Verfahren zum Bedienen eines Feldgeräts der Prozessautomatisierungstechnik mit mindestens zwei Messkanälen anzugeben, das die oben genannten Nachteile nicht aufweist, das insbesondere einfach und kostengünstig realisierbar ist.

Gelöst werden diese Aufgaben durch das Verfahren nach Anspruch 1.

Dadurch dass jedem Messkanal eine separate Gerätebeschreibung zugewiesen wird, müssen für mehrkanalige Feldgeräte weniger Gerätebeschreibungen erstellt werden. Dies bedeutet einen geringeren Aufwand für Feldgerätehersteller bei der Erzeugung der Gerätebeschreibungen und eine Vereinfachung der Bedienung für den Anwender.

Eine weitere Aufgabe der Erfindung ist es, ein Feldgerät der Prozessautomatisierungstechnik mit mindestens zwei Messkanälen anzugeben, das einfach bedienbar ist und das einfach und kostengünstig aufgebaut ist.

Gelöst wird diese Aufgabe durch das Feldgerät nach Anspruch 6.

Dadurch dass das Feldgerät eine Feldbusschnittstelle mit mehreren Kommunikationscontrollern, denen unterschiedliche Feldbusadressen zugeordnet sind, aufweist, erscheint das Feldgerät am Feldbus als mehrere logisch unabhängigen Feldgeräte. Damit kann jedes der logischen Feldgeräte mittels einer separaten Gerätebeschreibung bedient werden.

Weiterentwicklungen der Erfindung sind in den jeweiligen Unteransprüchen angegeben.

Die Erfindung ist gemäß einer Weiterentwicklung vor allem für Gerätebeschreibungen nach den Feldbusstandards HART, Profibus oder Foundation Fieldbus sowie für DTMs nach dem FDT-Standard geeignet.

Das Feldgerät kann einfach sowohl über den Feldbus wie auch über eine interne am Feldgerät vorgesehene Service-Schnittstelle bedient werden.

Zur einfachen Bedienung des Feldgerätes erscheinen, gemäß einer Weiterentwicklung, bei einer Busabfrage (Bus-Scan) die Messkanäle als separate Feldgeräte an der Bedieneinheit.

In einer Weiterentwicklung der Erfindung sind die in der Feldbusschnittstelle vorgesehenen mindestens zwei Kommunikationscontroller softwaremäßig auf einem Kommunikationshauptcontroller realisiert. Dadurch wird eine hohe Flexibilität erreicht.

Die Feldbusschnittstelle weist gemäß einer Weiterentwicklung der Erfindung einen konfigurierbaren Logikbaustein auf, auf dem die Kommunikationscontroller bzw. der Kommunikationshauptcontroller realisiert sind. Dadurch wird die Flexibilität weiter erhöht.

Nachfolgend ist die Erfindung anhand eines in der Zeichnung dargestellten Ausführungsbeispiels näher erläutert.

Es zeigen:

Fig. 1 Herkömmliches Feldgerät der Prozessautomatisierungstechnik

Fig. 2 Feldbusschnittstelle für ein erfindungsgemäßes Feldgerät

Fig. 3 alternative Ausgestaltung der Feldbusschnittstelle nach Fig. 2

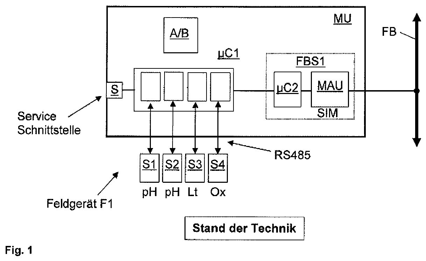

Das in Fig. 1 dargestellte Feldgerät F1 besteht im wesentlichen aus einem Messumformer MU, an den vier Sensoren S1-S4 angeschlossen sind. Bei diesen Sensoren handelt es sich um zwei pH-Sensoren, einen Leitfähigkeitssensor Lt und einen Sauerstoffsensor Ox. Diese Sensoren dienen zur Erfassung der entsprechenden Prozessvariablen pH-Wert, Leitfähigkeitswert oder Sauerstoffgehalt.

Die Sensoren S1-S4 sind jeweils mit einem Mikrocontroller µC1, der zur Messwertverarbeitung dient, verbunden. Die Messwertverarbeitung findet in einsprechenden Programmmodulen im Mikrocontroller µC1 statt. Diese Programmmodule bilden zusammen mit den Sensoren S1-S4 jeweils Messkanäle. Das Feldgerät F1 weist somit vier Messkanäle auf.

Die Kommunikation zwischen den Sensoren S1-S4 und dem Mikrocontroller µC1 erfolgt digital über eine RS485-Verbindung. In jedem der Sensoren S1-S4 wird im Wesentlichen die entsprechende Prozessvariable digitalisiert, die eigentliche Messwertverarbeitung findet in den Programmmodulen im Mikrocontroller µC1 statt.

Zur Anzeige der Messwerte und zur Parameterauswahl bzw. Parametereingabe dient eine Anzeigebedieneinheit A/B, die ebenfalls mit dem Mikrocontroller µC1 verbunden ist. Der Mikrocontroller µC1 ist über eine Feldbusschnittstelle FBS mit einem Feldbus FB (z. B. HART, Profibus, Foundation Fieldbus) verbunden. Die Feldbusschnittstelle FBS besteht im wesentlichen aus einem Kommunikationscontroller µC2 und einer Feldbusanschaltung MAU (medium attach unit). Bei der Feldbusanschaltung MAU kann es sich zum Beispiel um den SIM1-Baustein der Firma Siemens handeln. Im Kommunikationscontroller µC2 findet im wesentlichen die Protokollanpassung auf das entsprechende Feldbussystem (HART, Profibus, Foundation Fieldbus) statt.

Für den direkten Zugriff weist der Messumformer MU noch zusätzlich eine Serviceschnittstelle S auf, die ebenfalls mit dem Mikrocontroller µC1 verbunden ist. Bei dem Feldgerät F1 kann es sich im Prinzip um das Meßsystem Liquiline-Memosen der Fa. Endress+Hauser handeln.

Die Feldbusschnittstelle FBS ist für genau eine Feldbusadresse ausgelegt. Eingehende Feldbustelegramme werden in der Feldbusschnittstelle, insbesondere im Kommunikationscontroller µC2 dahingehend analysiert, ob sie die Feldbusadresse des Feldgerätes F1 aufweisen. Ist dies der Fall, so sind die Nutzdaten in dem Feldbustelegramm für das Feldgerät F1 bestimmt und werden an einem im Mikrocontroller µC1 ablaufendes Verarbeitungsprogramm weitergegeben. Bei den Nutzdaten kann es zum Beispiel um Leseanforderung oder Schreibanforderung für Daten des Messumformers MU bzw. der Sensoren S1-S4 handeln. Bei einer Leseanforderung werden die entsprechenden Daten vom Verarbeitungsprogramm bereitgestellt und an den Kommunikationscontroller µC2 übergeben. Der Kommunikationscontroller µC2 verpackt die angeforderten Daten in ein entsprechendes Feldbustelegramm, wobei als Absenderadresse die Feldbusadresse des Feldgerätes F1 angegeben wird.

Der Empfänger des Feldbustelegramms kennt somit die Herkunft der Daten.

Das Feldgerät kann mit Hilfe einer Bedieneinheit, z. B. einem Laptop-Rechner auf dem das Programm FieldCare der Fa. Endress+Hauser installiert ist, bedient werden. Hierfür ist eine für die spezielle Sensorkombination (2 x pH, 1 x Lt, 1 x Ox) entwickelte Gerätebeschreibung notwendig.

Das Feldgerät F1 erscheint als ein Feldbusteilnehmer an der Bedieneinheit.

Ersetzt der Anwender einen der Sensoren S1-S4 durch einen Sensor für eine andere Prozessvariable, so benötigt er eine weitere Gerätebeschreibung, die unter Umständen vom Feldgerätehersteller angefordert werden muss. Das Feldgerät F1 kann nur über die eine Feldbusadresse angesprochen werden.

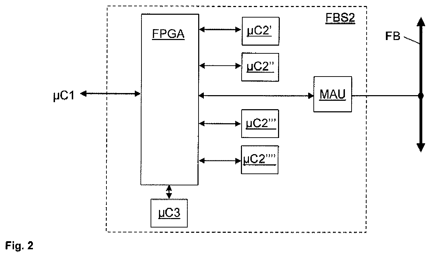

In Fig. 2 ist eine weitere Feldbusschnittstelle für das Feldgerät F1 dargestellt. Wird diese als FBS2 bezeichnete Feldbusschnittstelle im Feldgerät F1 eingesetzt, so wird das Feldgerät F1 zu einem erfindungsgemäßen Feldgerät (im Folgenden als Feldgerät F1' bezeichnet), das auch für das erfindungsgemäße Verfahren geeignet ist.

Die Feldbusschnittstelle FBS2 umfasst eine Feldbusanschaltung MAU, wie die in Fig. 1 dargestellte Feldbusschnittstelle FBS1. Die Feldbusanschaltung MAU ist mit einem konfigurierbaren Logikbaustein z. B. einem FPGA (field programmable gate array) verbunden. An den Logikbaustein FPGA sind vier Kommunikationscontroller µC2, µC2', µC2" und µC2'" angeschlossen. Jeder dieser Kommunikationscontroller entspricht im Wesentlichen dem in Fig. 1 dargestellten Kommunikationscontroller µC2.

Weiterhin ist der programmierbare Logikbaustein FPGA mit einem Mikrocontroller µC3, der verschiedene Steuerungsaufgaben erledigt, verbunden.

Außerdem weist der programmierbare Logikbaustein FPGA eine Verbindung zum Mikrocontroller µC1 auf. Die Feldbusschnittstelle FBS2 kann also anstatt der in Fig. 1 dargestellte Feldbusschnittstelle FBS1 eingesetzt werden.

Nachfolgend ist die Funktionsweise dieser Feldbusschnittstelle FBS2 näher erläutert. Die eingehenden Feldbustelegramme werden jeweils in den Kommunikationscontroller µC2 - µC2"' analysiert. Jedem dieser Kommunikationscontroller ist eine separate Feldbusadresse zugeordnet. Stellt einer der Kommunikationscontroller µC2 bis µC2"' fest, dass die im Feldbustelegramm enthaltene Zieladresse mit seiner eigenen Feldbusadresse übereinstimmt, so leitet dieser Kommunikationscontroller die Nutzdaten über den Logikbaustein FPGA an den Mikrocontroller µC1 weiter. Entsprechende Antworttelegramme werden jeweils über den gleichen Kommunikationscontroller abgearbeitet und anschließend über die Feldbusanschaltung MAU über den Feldbus FB gesendet.

Damit erscheint das Feldgerät F1', das die Feldbusschnittstelle FBS2 aufweist, bei einer Busabfrage (Bus-Scan) als vier verschiedene (logische) Feldgeräte.

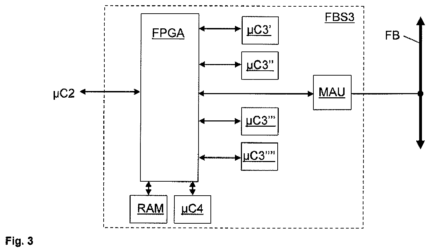

In Fig. 3 ist eine alternative Ausgestaltung der Feldbusschnittstelle FBS2 näher dargestellt. Diese Feldbusschnittstelle FBS3 weist im Gegensatz der Feldbusschnittstelle FBS2 vier "abgespeckte" Versionen der Kommunikationscontroller µC2 - µC2"' auf. Diese "abgespeckten" Kommunikationscontroller sind als µC3 - µC3"' bezeichnet. Die in diesen Kommunikationscontrollern nicht mehr zur Verfügung stehende Funktionalität, wurde in einen Kommunikationscontroller µC4 verlagert, der ebenfalls mit dem Logikbaustein FPGA verbunden ist. Weiterhin ist der Logikbaustein FPGA mit einem Speicher RAM verbunden.

In einer in der Zeichnung nicht dargestellten alternativen Ausgestaltung der Erfindung sind die Kommunikationscontroller µC2 - µC2"' softwaremäßig auf einem Kommunikationscontroller realisiert.

In einer in der Zeichnung nicht dargestellten alternativen Ausgestaltung der Feldbusschnittstelle FBS2 besteht diese nur noch aus der Feldbusanschaltung MAU, einem leistungsfähigen rekonfigurierbaren Logikbaustein FPGA, auf dem die Kommunikationscontroller µC2 - µC2"' bzw. der Kommunikationshauptcontroller realisiert sind.

Der für den konfigurierenden Logikbaustein FPGA notwendige Code wird in einer Hardwarebeschreibungssprache z. B. VHDL erstellt.

Nachfolgend ist die Erfindung nochmals näher erläutert.

Für jeden Messkanal im Feldgerät wird vom Feldgerätehersteller eine eigenen Gerätebeschreibung erstellt.

Zur Bedienung des Feldgerätes F1' kann der Anwender die vier Messkanäle separat über die entsprechende Gerätebeschreibung aufrufen. An der Bedieneinheit erscheint das Feldgerät F1' als vier verschiedene Feldgeräte, also als vier getrennte logische Einheiten.

Für den Anwender wird deshalb die Bedienung erheblich einfacher und klarer.

Der Feldgerätehersteller muss in diesem Fall nur drei verschiedene Gerätebeschreibungen zur Verfügung stellen, um alle möglichen Sensorkombinationen abdecken zu können. Dadurch wird die Entwicklung der für die Bedienung benötigten Gerätebeschreibungen erheblich vereinfacht.

Tauscht der Anwender einen der Sensoren S1-S4 aus, so benötigt er keine neue Gerätebeschreibung für die Bedieneinheit.

Die Bedienung des Feldgerätes F1' ist nicht nur über den Feldbus FB sondern auch über die Service-Schnittstelle S möglich.

## Patentansprüche

1. Verfahren zum Bedienen eines Feldgeräts der Prozessautomatisierungstechnik mit mindestens zwei Messkanälen, mit Hilfe einer externen Bedieneinheit, wobei die Messkanäle je einen Sensor (S1, S2, S3, S4) zur Erfassung von Prozessvariablen und ein in einem Mikrocontroller (µC1) ablaufendes Programmmodul zur Messwertverarbeitung aufweisen,
wobei die Kommunikation zwischen den Sensoren (S1, S2, S3, S4) und dem Mikrocontroller (µC1) digital über eine RS485-Verbindung erfolgt, und wobei das Feldgerät zum Anschluss an einen Feldbus eine einzige Feldbusschnittstelle (FBS) aufweist, die mit dem Mikrocontroller (µC1) verbunden ist, **dadurch gekennzeichnet, dass** die Feldbusschnittstelle (FBS) mindestens zwei Kommunikationscontroller (µC2, µC2', µC2", µC2'") aufweist denen unterschiedliche Feldbusadressen zugeordnet sind, dass in der Bedieneinheit für die Messkanäle separate Gerätebeschreibungen vorgesehen sind und die einzelnen Messkanäle über die entsprechende Gerätebeschreibung als logische Einheit an der Bedieneinheit aufgerufen werden, so dass beim Bedienen für den Anwender das Feldgerät als mindestens zwei logisch unabhängige Feldgeräte erscheint.

2. Verfahren nach Anspruch 1, **dadurch gekennzeichnet, dass** die Gerätebeschreibungen solche gemäß einem der Feldbusstandards HART, Profibus oder Foundation Fieldbus sind, oder DTMs, device type manager, gemäß dem FDT-Standard sind.

3. Verfahren nach Anspruch 2, **dadurch gekennzeichnet, dass** das Feldgerät über einen Feldbus mit der Bedieneinheit verbunden ist.

4. Verfahren nach Anspruch 2, **dadurch gekennzeichnet, dass** das Feldgerät über eine am Feldgerät vorgesehene Service-Schnittstelle mit der Bedieneinheit verbunden ist.

5. Verfahren nach Anspruch 3, **dadurch gekennzeichnet, dass** bei einer Busabfrage zur Ermittlung der mit dem Feldbus verbundenen Feldbusteilnehmer, jeder Messkanal des Feldgerätes als separates Feldgerät an der Bedieneinheit erscheint.

6. Feldgerät der Prozessautomatisierungstechnik mit mindestens zwei Messkanälen, wobei die Messkanäle je einen Sensor (S1, S2, S3, S4) zur Erfassung von Prozessvariablen und ein in einem Mikrocontroller (µC1) ablaufendes Programmmodul zur Messwertverarbeitung aufweisen wobei das Feldgerät zum Anschluss an einen Feldbus eine einzige Feldbusschnittstelle (FBS) aufweist, die mit dem Mikrocontroller (µC1) verbunden ist,
wobei die Kommunikation zwischen den Sensoren (S1, S2, S3, S4) und dem Mikrocontroller (µC1) digital über eine RS485-Verbindung erfolgt,
**dadurch gekennzeichnet, dass** die Feldbusschnittstelle (FBS) mindestens zwei Kommunikationscontroller (µC2, µC2', µC2", µC2"') aufweist, denen unterschiedliche Feldbusadressen zugeordnet sind so dass beim Bedienen des Feldgerätes mit Hilfe einer externen Bedieneinheit, in welcher für die Messkanäle separate Gerätebeschreibungen vorgesehen sind, die einzelnen Messkanäle über die entsprechende Gerätebeschreibung als logische Einheit an der Bedieneinheit aufgerufen werden und für den Anwender das Feldgerät als mindestens zwei logisch unabhängige Feldgeräte erscheint, und wobei die Kommunikationscontroller (µC2, µC2', µC2", µC2"') mit je einem Messkanal Daten austauschen.

7. Feldgerät nach Anspruch 6, **dadurch gekennzeichnet, dass** die mindestens zwei Kommunikationscontroller (µC2, µC2', µC2", µC2"') softwaremäßig in einem einzigen Kommunikationshauptcontroller realisiert sind.

8. Feldgerät nach Anspruch 6 oder 7, **dadurch gekennzeichnet, dass** die Feldbusschnittstelle (FBS) einen konfigurierbaren Logikbaustein (FPGA) aufweist, auf dem der Kommunikationshauptcontroller bzw. die Kommunikationscontroller (µC2, µC2', µC2", µC2"') realisiert sind.

## Claims

1. Procedure for operating a field device used in process automation engineering with at least two measuring channels with the aid of an external operating unit, wherein the measuring channels have one sensor each (S1, S2, S3, S4) for recording process variables and a program module for measured value processing running in a microcontroller (µC1),
wherein the communication between the sensors (S1, S2, S3, S4) and the microcontroller (µC1) takes place digitally via an RS485 connection, and wherein the field device has a single fieldbus interface (FBS) for connection to a fieldbus, said interface being connected to the microcontroller (µC1),
**characterized**
**in that** the fieldbus interface (FBS) has at least two communication controllers (µC2, µC2', µC2", µC2"') to which different fieldbus addresses are assigned; in that separate device descriptions are provided in the operating unit for the measuring channels and the individual measuring channels are called up as a logic unit at the operating unit via the corresponding device description such that, during operation, the field device appears as at least two logically independent field devices for the user.

2. Procedure as claimed in Claim 1, **characterized in that** the device descriptions are such descriptions according to one of the fieldbus standards HART, Profibus or Foundation Fieldbus or are DTMs, device type managers, according to the FDT standard.

3. Procedure as claimed in Claim 2, **characterized in that** the field device is connected to the operating unit via a fieldbus.

4. Procedure as claimed in Claim 2, **characterized in that** the field device is connected to the operating unit via a service interface provided on the field device.

5. Procedure as claimed in Claim 3, **characterized in that** in the event of a bus scan to determine the fieldbus users connected to the fieldbus every measuring channel of the field device appears as a separate field device on the operating unit.

6. Field device used in process automation engineering with at least two measuring channels, wherein the measuring channels each have a sensor (S1, S2, S3, S4) to record process variables and a program module for measured value processing running in a microcontroller (µC1), wherein the field device has a single fieldbus interface (FBS) for connecting to a fieldbus, said fieldbus interface (FBS) being connected to the microcontroller (µC1), wherein the communication between the sensors (S1, S2, S3, S4) and the microcontroller (µC1) takes place digitally via an RS485 connection, **characterized in that** the fieldbus interface (FBS) has at least two communication controllers (µC2, µC2', µC2", µC2"') to which different fieldbus addresses are assigned such that when the field device is operated using an external operating unit in which separate device descriptions are provided for the measuring channels, the individual measuring channels are called up as a logic unit at the operating unit via the corresponding device description and **in that** the field device appears as at least two logically independent field devices for the user and wherein the communication controllers (µC2, µC2', µC2", µC2"') each exchange data with a measuring channel.

7. Field device as claimed in Claim 6, **characterized in that** at least two communication controllers (µC2, µC2', µC2", µC2"') are implemented from a software perspective in a single communication main controller.

8. Field device as claimed in Claim 6 or 7, **characterized in that** the fieldbus interface (FBS) has a configurable logic module (FPGA) on which the communication main controller and/or the communication controllers (µC2, µC2', µC2", µC2"') are implemented.

## Revendications

1. Procédé destiné à l'exploitation d'un appareil de terrain de la technique d'automatisation des process avec au moins deux voies de mesure, à l'aide d'une unité de commande externe, les voies de mesure comprenant chacune un capteur (S1, S2, S3, S4) destiné à l'acquisition de variables process et un module de programme exécuté dans un microcontrôleur (µC1), destiné au traitement des valeurs mesurées,
pour lequel la communication entre les capteurs (S1, S2, S3, S4) et le microcontrôleur (µC1) s'effectue de manière numérique via une liaison RS485, et pour lequel l'appareil de terrain comporte pour le raccordement à un bus de terrain une unique interface de bus de terrain (FBS), qui est reliée avec le microcontrôleur (µC1),
**caractérisé**
**en ce que** l'interface de bus de terrain (FBS) comprend au moins deux contrôleurs de communication (µC2, µC2', µC2", µC2"'), auxquels sont attribués différentes adresses de bus,
**en ce que** sont prévues, dans l'unité de commande pour les voies de mesure, des descriptions d'appareil séparées et **en ce que** les différentes voies de mesure sont appelées par le biais de la description d'appareil correspondante en tant qu'unité logique sur l'unité de commande, de telle sorte qu'apparaît lors de la commande par l'utilisateur l'appareil de terrain en tant qu'au moins deux appareils de terrain logiquement indépendants.

2. Procédé selon la revendication 1, **caractérisé en ce que** les descriptions d'appareil sont conformes à l'une des normes de bus de terrain HART, Profibus ou Foundation Fieldbus, ou à des DTM ("Device Type Manager") conformes à la norme FDT.

3. Procédé selon la revendication 2, **caractérisé en ce que** l'appareil de terrain est relié avec l'unité de commande par l'intermédiaire d'un bus de terrain.

4. Procédé selon la revendication 2, **caractérisé en ce que** l'appareil de terrain est relié avec l'unité de commande par l'intermédiaire d'une interface de service prévue sur l'appareil de terrain.

5. Procédé selon la revendication 3, **caractérisé en ce que** dans le cas d'une interrogation du bus destinée à la détermination des utilisateurs de bus de terrain reliés avec ce dernier, chaque voie de mesure de l'appareil de terrain apparaît en tant qu'appareil de terrain séparé sur l'unité de commande.

6. Appareil de terrain de la technique d'automatisation des process avec au moins deux voies de mesure, les voies de mesure comprenant chacune un capteur (S1, S2, S3, S4) destiné à l'acquisition de variables process et un module de programme exécuté dans un microcontrôleur (µC1), destiné au traitement des valeurs mesurées,
pour lequel l'appareil de terrain comporte pour le raccordement à un bus de terrain une unique interface de bus de terrain (FBS), qui est reliée avec le microcontrôleur (µC1),
pour lequel la communication entre les capteurs (S1, S2, S3, S4) et le microcontrôleur (µC1) s'effectue de manière numérique via une liaison RS485,
**caractérisé**
**en ce que** l'interface de bus de terrain (FBS) comprend au moins deux contrôleurs de communication (µC2, µC2', µC2", µC2"'), auxquels sont attribués différentes adresses de bus, de telle sorte que lors de la commande de l'appareil de terrain à l'aide d'une unité de commande externe, dans laquelle sont prévues des descriptions d'appareil séparées pour les voies de mesure, les différentes voies de mesure peuvent être appelées par le biais de la description d'appareil correspondante en tant qu'unité logique sur l'unité de commande, et de telle sorte que l'appareil de terrain apparaît pour l'utilisateur en tant qu'au moins deux appareils de terrain logiquement indépendants et les contrôleurs de communication (µC2, µC2', µC2", µC2"') échangeant des données avec respectivement une voie de mesure.

7. Appareil de terrain selon la revendication 6, **caractérisé en ce que** les au moins deux contrôleurs de communication (µC2, µC2', µC2", µC2"') sont réalisés d'un point de vue logiciel dans un unique contrôleur principal de communication.

8. Appareil de terrain selon la revendication 6 ou 7, **caractérisé en ce que** l'interface de bus de terrain (FBS) comporte un composant logique (FPGA) configurable, sur lequel le contrôleur principal de communication ou le contrôleur de communication (µC2, µC2', µC2", µC2"') est réalisé.
